# EUROPEAN PATENT SPECIFICATION

(11) **EP 0 809 245 B1**
(45) Date of publication and mention of the grant of the patent: **10.04.2002**
(21) Application number: 97107292.1
(22) Date of filing: 02.05.1997
(51) Int. Cl.: G11B 20/00, G11B 23/28

(54) **Improvements in or relating to security systems**
Verbesserungen in Bezug auf Sicherheitssysteme
Améliorations relatives aux systèmes de sécurité

(30) Priority: 02.05.1996 US 16745
(43) Date of publication of application: 26.11.1997
(73) Proprietor: TEXAS INSTRUMENTS INCORPORATED, Dallas Texas 75265 (US)
(72) Inventor: Nerlikar, Virupax S., Plano, Texas 75023 (US); Edenson, Roy I., Richardson, Texas 75081 (US)
(74) Representative: Schwepfinger, Karl-Heinz, Dipl.-Ing.

(56) References cited:
- US-A- 4 827 395
- US-A- 4 918 955
- US-A- 5 245 332
- US-A- 5 287 112
- US-A- 5 430 441
- US-A- 5 450 087
- US-A- 5 461 386
- US-A- 5 499 017
- "TIRIS ZET AUTODIEVEN OP ZIJSPOOR" POLYTECHNISCH TIJDSCHRIFT, ELEKTROTECHNIEK, ELEKTRONICA, vol. 49, no. 5, May 1994, page 7 XP000454909

## Description

### FIELD OF THE INVENTION

This invention relates in general to security systems, and more specifically to an RF-ID system for securing the intellectual property value of copyrighted material.

### BACKGROUND OF THE INVENTION

RF-ID systems are increasingly being used for a wide range of applications. In a typical RF-ID system, an interrogator transmits an interrogation signal, to a transponder, within read range of the interrogator, and the transponder responds by transmitting it's identification number either by backscattering the interrogation signal in a full duplex mode, or by transmitting it's identification signal after being powered up by the interrogation signal in a half duplex mode. RF-ID technology has found a niche in the security market. Transponders are easily attached to security badges, toll tags, or gate passes to allow/prohibit access or even provide automatic billing services, (i.e. toll roads and parking garages, and readers are as readily constructed into toll booths, and doorways). On an even smaller scale, RF-ID systems can provide security and tracking capabilities for a wide variety of goods. Warehouses, libraries, and manufacturing plants are all potential venues with regard to the tracking aspect of RF-ID systems. However, with respect to the security aspect of RF-ID systems, the tracking and security of Secret or Top Secret government documents, is one of the areas which focuses on allowing or prohibiting access to a physical object, (i.e. a document). An even further extension from tracking and securing an object, is to allow only copyrighted objects, (i.e. Digital Video Disk (DVD) and Digital Videocassette (DV) to be played on players such as DVD players).

The current methodologies available for exercising copyright/anti-tape protection can be characterized as mostly deterrents constituting little more than "Warning Labels". This program material is mostly of an analog, "branded" multimedia content such as pre-recorded VHS tapes of major studio motion pictures, CDs, cassettes, broadcast movies via cable/satellite channels, etc. Recording artists, major studios and the like have tolerated such inadequate safeguards because until recently the copied product resultant was degraded in quality sufficiently that it could not duplicate the quality of the original Master material itself. In fact, there is a US government act, the HRA ACT of 1992 that allows one analog copy of a copyrighted work to be made and played at a time (i.e. if you leave your cassette in the car and it melts, the ACT allows you to make another copy for your use, but it does not permit the making of several copies for sale).

The explosion of removable digital media in the marketplace today has increased the convenience of storing and using such devices for a wide variety of publication purposes. In particular optical disk media represents a relatively low cost method of publishing mass quantities of digital data and information. The nature of this "published" or compiled information can vary significantly, from movie entertainment to games, to interactive training, to X-rays or other image files. The copying of optical disk media is the most difficult form of media copyright violation to protect against since making optical copies of an original disk also copies the protection schemes onto subsequent counterfeit media. In addition, if the protection scheme is digital, hackers may be able to get around the security and circumvent the protection. Unlike analog copies, due to the intrinsic nature of "perfect" digital copies, the duplicates cannot be differentiated from the originals. Additionally, the redistribution and or reformatting of these copies in an unauthorized manner represents a further threat of revenue loss and to a misrepresentation of the legal rights of the owners' authentic property.

In one solution to the optical disk counterfeit problem, a cypher key is introduced where a TIRIS transponder is embedded into the media and upon insertion of the media into a media player, the media player interrogates the transponder which responds with an address of a data-word, located on the media itself, and a codeword. The media player then locates the dataword at that particular address on the media and if there is a match between the received codeword and read data-word, then the media player will play the media. The cypher key has the ability to deter production of counterfeit disks because the transponder cannot be optically copied and the encryption code data is not easily hacked especially due to zero knowledge techniques that can be employed using the RF link between transponder and transceiver. This code data, if deployed using a full integrated architecture, can be prevented from appearing on the host machine's data bus altogether, thereby isolating it from corruption. The problems associated with this solution are that the largest portion of the financial burden lies with the players or periphery devices which perform some function on the copyrighted media and the greatest benefit would be conferred upon the copyright holders (i.e the Motion Picture Association of America). For example, if the media were Digital Video Disks, the only cost increase to the copyright holders would be the addition of a transponder to the media itself, maybe $1. On the other hand, the periphery device manufacturer must add an interrogator to it's DVD player and possibly additional circuitry that allows for the read of a particular address on the disk at a potential cost of $500.

In matters where such publication methods are employed on copyrighted or sensitive source data, some improved method of guaranteeing the control and distribution of such data needs to be employed that is independent of the actual data contained on the data tracks of the media. Further, a method of insuring use of the copyrighted works should both be robust and highly resistant to either software or hardware hacking. A breach would render the protection system useless and expose the rightful owners to copyright infringement or the like. Therefore, a totally effective system should provide dimensions of counterfeit protection, and copy control capability.

### SUMMARY OF THE INVENTION

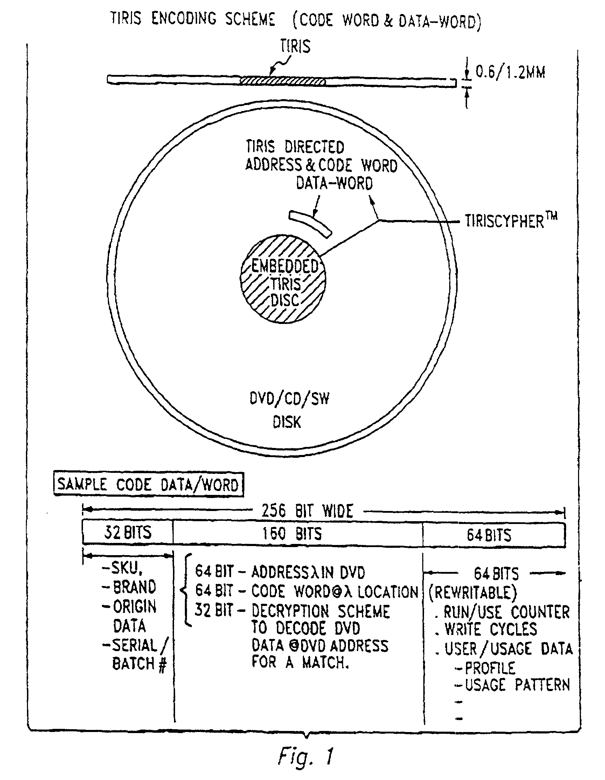

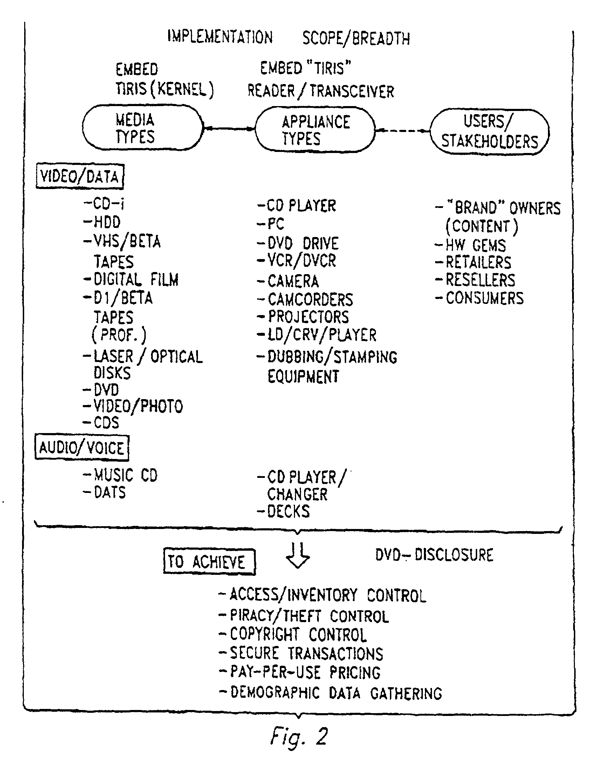

The system of protection described below offers additional potential benefits for all stakeholders in the value chain, including inventory control, pay-per-use pricing transactions, tiered level access control and demographic data gathering. The unique nature of the TIRIS cypher (Texas Instruments Registration and Identification System) approach enables new levels of sophistication in the control and tracking of packaged media material, in order to allow copyright owners to add greater value and protection. The TIRIS cypher is a substantially flat batteryless radio-frequency semiconductor transponder package which is bonded or embedded to the center of a copyrighted DVD media. Encrypted with a variety of information bits that can only be read with a TIRIS transceiver, located in the player, the disk is checked for authenticity.
The invention consists of a hard disk drive architecture which includes a level of intelligence to be downloaded from the transponder into the hard disk drive. The periphery devices of the future will be able to distinguish which form of media has been inserted into the periphery device. For example, upon insertion of a DVD disk into a DVD player, the player would read the transponder located on the media device, even before enabling the player, and that read would provide the bios, operating set-up, necessary to play the DVD disk. Where bios is traditionally located on the hard drive or in this example, in the player, having the bios located on the media element transfers the responsibility of protecting the media against counterfeit reproductions back to the copyright holders. Within the context of the bios, the copyright holders would define many operating parameters such as the type of media to be performed upon, how many copies, if any, are allowed, at what point in time the media is enabled, i.e to handle regional releases etc. More specifically, the decryption key resides on the transponder itself, thereby allowing a DVD player or drive to load such a decryption algorithm (or it's pointer) into it's resident flash ROM enabling a resident Conditional Access Management Processor (C.A.M.P.) to perform individual content dependent decryption from disk to disk. The CAMP comprises at least the following elements, as depicted in Figures 1 and 2, a conditional access logic unit, a TIRIS transponder flash ROM buffer. A conditional access logic unit is found in the CAMP for receiving the DVD bit streams which include the TIRIS dataword located at some predetermined address and all the digital content of the DVD from the disk reader. Even before the reading of the disk, the interrogator within the disk reader is interrogating the transponder located on the disk and the transponder is transmitting back to the interrogator the Code Word, address of the data-word, media type, decryption algorithm and copyright information etc or in other words the bios or set-up information for the processor. For example, the decryption algorithm defines the algorithm used. This bit stream is then stored in the flash ROM buffer before being input to the data decryption processor which descrambles or decryptes the entire DVD bit streams prior to decoding the bit streams. Therefore, a portion of the Drive/Servo Digital Signal Processor (DSP) can act as a "vessel" of sorts allowing the processing dictated by the content provider(media element transponder) to perform the decryption or descrambling prior to decoding(i.e. Motion Pictures Experts Group (MPEG)-2).

Alternatively, the illegally copied disk would be recognized without TIRIS and no decryption algorithm would be available to descramble the MPEG data stream. Additionally, instructions within the periphery device could force the disk to be ejected upon failing to meet the required legacy or TIRIS authentication tests. Also, port disabling and or interface reconfiguration may be employed upon detection of either counterfeit media or media intended for controlled or limited distribution.

A legally recorded but non-encrypted disk could be allowed to playback the MPEG data stream, however not through the hardware MPEG decoder built into the drive, but rather through MPEG software decoding if available elsewhere (i.e in the host machine). This would serve to encourage HDD manufacturers to include the TIRIS based configuration hardware in their drive designs in order to playback Motion Picture Association of America (MPAA) sanctioned media (copyprotected with decryption data embedded in the media's transponder), however, would allow other drives to be built for less cost that would rely on software decoding and could not deal with further encryption except if a decryption code is carried in software elsewhere.

The complete "TIRIS" cypher solution would also include any software/firmware algorithms needed to provide the secured access to only authorized users. In other words, both the codeword or the predetermined address may be encrypted within the transponder according to some predetermined algorithm preprogrammed at the manufacturing level or programmed by the customer (i.e each copyright owner). In the case of an encrypted codeword and address, both would then be decrypted by the interrogation section of the media player upon receipt of such. The corresponding interrogator would be embedded in the DVD player itself or any appliance involved in the "value chain". The "value-chain" comprising media production to final distribution at the retail level and on to the ultimate user (e.g. check-out lanes at retail/rental stores production lines of DVD media).

### BRIEF DESCRIPTION OF THE DRAWINGS

The present invention will now be further described, by way of example, with reference to the accompanying drawings in which:-
Figure 1 shows a block diagram of a DVD player(ROM type for published media) plus the TIRIS cypher; and
Figure 2 shows a block diagram of a DVD RAM drive (Rewritable Optical) plus the TIRIS cypher.

### DETAILED DESCRIPTION OF THE PREFERRED EMBODIMENTS

A TIRIS-like transponder (flat and circular type...about 1" in diameter and about 0.5mm thick) can be implemented for various digital storage media during the media production phase. A single-page baseline transponder may have from 256 bits to 512 bits of memory. These bits will be allocated to store at least a code word, media type, decryption algorithm, copyright information, an "encoded or encrypted" address location within the media itself etc. This disk address serves as a pointer to a specific data-word which is embedded anywhere within the disk's program material. This unique data-word contained on the disk within the digital data stream (not yet accessible to the viewer of the program content until after authentication is verified) is then compared with a preassigned code word located in the memory of the transponder itself. If there is a match between the media data-word and the TIRIS code word, authentication is complete, affording play access to the content.

Additionally, a "check-sum" word may also be used in the authentication scheme to provide more levels of security. Look-up table access may be used to select pre-stored algorithms for data or address matching. An example of an intended bit allocation scheme is shown in Figure 1. Note that in this example, the use of the first 32 bits of the transponder response datastream may comprise product tracking data which could provide detailed logging information regarding the manufacturing and inventory control of copyrighted material. Just some examples noted, are product SKU, Batch #, Date and Location Code. The central 160 bits of data are dedicated to the 64 bit physical address of the data-word on the DVD itself and the next 64 bits are assigned to a TIRIS transponder code-word. The final 32 bits, shown for illustrative purposes only, may comprise a 32 bit code used in a decryption scheme if applicable, (i.e. if the codeword and/or the predetermined address are encrypted by the transponder), the transponder may send an up to 32 bit decryption scheme with the encrypted codeword and/or predetermined address with which to allow the interrogator to decrypt. Continuing with this example, the last 64 bits (as shown in Figure 1) could be reserved to contain post-manufactured rewritable data, such as the run/elapsed viewing'; time counter to count the number of times the media has been played or used, (i.e. to enable pay-per-view pricing), or limit the number of authorized runs for a run-specific pricing, and also store the number of "write" cycles. More advanced readers could make use of these bits to provide remotely controlled polling capability, as the tracking of media usage moves away from broadcast only based viewing measurement organizations such as Nielson, as well as theater ticket sales. Additionally, real-time usage data, trends from the transaction audit trail created by this system, would enable the user real-time Nielson like rating for feedback to the content owners, retailers OEMs etc. The player with the TIRIS system can be polled real-time (through the two-way communication link of the network card) to provide appropriate advertising feeds to that target audience. This is an extra benefit to the advertisers for product branding, promotions, etc.

An additional feature for the DVD or media player owner would be to utilize the TIRIS transponder information along with media based information to create a personal media content library management function.

To further protect the integrity of the security scheme, the TIRIS reader/interrogator function and the matching process must be completed internally (i.e. on the internal communications bus of the interrogation IC). The Motion Pictures Expert Group (MPEG) decoder could also be located within the intelligence of the media player as well, so that attempts to break the code and to defeat the protection would be extremely difficult. Integration of the TIRIS interrogator/reader and MPEG decoder on a single IC chip is highly desirable since such configurations would help assure copyright protection.

In the event of a successful authentication, the usage and other user-bit counters, and the writable elements of the transponder can be accessible in the value chain, such as retailers, resellers, end-users and content providers or their agents, (i.e. intellectual property/royalty collection third parties or agents, etc). In the event of a "branded" content non-match of authenticity, the DVD player could indicate detection of an "unauthorized program copy". The TIRIS reader then would switch to a prerecorded copyright warning/notice location, possibly stored as an on screen display (OSD) message.

For high end applications (i.e. using read/write), multipage transponder, inventory control, logistic and retail management functionality is possible, with implementation benefiting retailers, equipment manufacturers (hardware OEMs), resellers and redistributors also a reality. The "prelocated origin data" such as the date/place of manufacture, edition/catalogue numbers, may be embedded and encrypted into the DVD to provide excellent legacy system over-ride for older already owned legitimate media. The upcoming DVD players are expected to be able to differentiate between various media types.

If the media type is determined to be an earlier type (as in music CDs or CD ROMs), the DVD player/TIRIS reader of course would not need to decode an MPEG data stream and therefore would allow normal playback of such material. In the alternative case of an original and genuine non-TIRIScypher DVD media, (i.e. in circulation before TIRIS cypher encrypted material), the player/reader would detect earlier type excluded DVD embedded date-codes and grant a limited number of play accesses. Beyond this number of plays, (tracked with run counter in transponder userbit data field, see Figure 1), a trade-in and upgrade message could be displayed for the purchase of conforming media.

This scheme would effectively deliver pirated media material to the copyright owners for further action and allow legitimate owners to have their material conformed, while supplying valuable demographic information to copyright owners. The foregoing combination of hardware, firmware/software sub-system methodology may be referred to as the "TIRIScypher subsystem" for copyright protection of branded content.

The invention outlined below addresses the copyright and secured access protection issues for the DVD, next generation compact/optical disks, which would essentially be storing high value, high quality, digitally compressed content. For the purpose of simplicity, the discussion here is limited to DVD type material only, however, the scope of the invention herein is much broader, which may include other packaged media types with associated players/appliances, as has been outlined in Figure 2. In addition, the transponder could have read-only or read/write capability, with single or multiple page capacity with the cost constraints and/or system requirements actually defining those parameters.

## Claims

1. A method of insuring that only copyrighted material is usable in a digital media system, comprising the steps of:
integrating a radio-frequency interrogator with a media player having I/O ports for transmitting an interrogation signal to a transponder and for receiving a transponder response signal in response;
attaching a transponder to a media element for use in the digital media system wherein said transponder transmits a transponder response signal comprising decryption algorithms;
receiving a transponder response signal and providing said decryption algorithms to a processor;
configuring said processor according to said decryption algorithms in order to process a digital media content stream generated from said media element.

2. The method according to Claim 1, wherein said configuring step comprises:
downloading said decryption algorithms to a non-volatile memory wherein the output of the Flash ROM is input to said processor.

3. The method according to Claim 2, wherein said downloading step comprises downloading said decryption algorithms to a Flash ROM.

4. The method according to claim 1, wherein said configuring step comprises:
providing information for configuring the I/O ports.

5. A method of insuring that only copyrighted material is usable in digital media system, comprising the steps of:
integrating a radio-frequency interrogator with a media player having I/O ports for transmitting an interrogation signal to a transponder and for receiving a transponder response signal in response;
attaching a transponder to a media element for use in the digital media system wherein said transponder transmits a transponder response signal comprising pointers for decryption algorithms;
receiving a transponder response signal and providing said pointers for encryption algorithms at some predetermined address to said media system;
reading said encryption algorithms at said predetermined address or some predetermined location and providing them to a processor;
configuring said processor according to said decryption algorithms in order to process the digital media content stream generated from said media element or provide information on access to configuring the I/O ports;
providing instructions to the processor on how to configure itself.

6. The method according to Claim 5 further comprising; programming said predetermined address into the transponder memory at the manufacturing level.

7. The method according to Claim 5 further comprising; programming said predetermined address into the transponder at the customer level.

8. The method according to any of Claims 5 to 7 further comprising; encrypting said predetermined address with the transponder.

9. A method of insuring that only copyrighted material is usable in a digital media system, comprising the steps of:
integrating a radio-frequency interrogator with a media player for transmitting an interrogation signal to a transponder and for receiving a transponder response signal in response and for reading a dataword on a media element;
attaching a transponder to a predetermined media element wherein said transponder transmits a transponder response signal comprising a codeword and a predetermined address associated with said predetermined media element to said interrogator in response to said interrogation signal;
receiving a transponder response signal and providing said predetermined address to said media player;
reading said dataword at said predetermined address;
comparing said dataword and said codeword and authorizing the play or use of said media element upon a match of said dataword and said codeword.

10. The method according to Claim 9, further comprising programming said codeword and said predetermined address into a transponder memory at the manufacturing level.

11. The method according to Claim 9, further comprising programming said codeword and said predetermined address into a transponder memory at the customer level.

12. The method according to any of Claims 9 to 11, further comprising performing an encryption of at least one of said codewords and said predetermined address with the transponder.

13. The method according to any of Claims 9 to 12, further comprising performing said comparing step within the same integrated circuit.

14. The method according to any of Claims 9 to 13 further comprising performing said comparing step using a look-up table.

15. The method according to any of Claims 9 to 14 further comprising performing said comparing step with an algorithm.

## Patentansprüche

1. Verfahren zum Gewährleisten, daß nur urheberrechtlich geschütztes Material in einem Digitalmedien-System verwendbar ist, folgende Schritte umfassend:
Integrieren einer Funkfrequenz-Abfrageeinrichtung in einem Medien-Abspielgerät, das E/A-Anschlüsse zur Übermittlung eines Abfragesignals an einen Transponder und zum Empfangen eines Transponder-Antwortsignals als Antwort darauf aufweist;
Anbringen eines Transponders an einem Medienelement zur Verwendung in dem Digitalmedien-System, worin der Transponder ein Transponder-Antwortsignal sendet, das Entschlüsselungsalgorithmen enthält;
Empfangen eines Transponder-Antwortsignals und Bereitstellen des Entschlüsselungsalgorithmus gegenüber einem Prozessor;
Konfigurieren des Prozessors entsprechend den Entschlüsselungsalgorithmen zur Verarbeitung eines digitalen Medieninhaltstroms, der ausgehend von dem Medienelement erzeugt wurde.

2. Verfahren nach Anspruch 1, bei welchem der Schritt des Konfigurierens umfaßt:
Herunterladen des Entschlüsselungsalgorithmus auf einen nicht flüchtigen Speicher, wobei die Ausgabe eines Flash-ROM in den Prozessor eingegeben wird.

3. Verfahren nach Anspruch 2, bei welchem der Schritt des Herunterladens das Herunterladen der Entschlüsselungsalgorithmen in ein Flash-ROM umfaßt.

4. Verfahren nach Anspruch 1, bei welchem der Schritt des Konfigurierens umfaßt:
Bereitstellen von Informationen zum Konfigurieren der E/A-Anschlüsse.

5. Verfahren zur Gewährleistung, daß nur durch Urheberrecht geschütztes Material in einem Digitalmedien-System verwendbar ist, folgende Schritte umfassend:
Integrieren einer Funkfrequenz-Abfrageeinrichtung in einem Medienabspielgerät, das E/A-Anschlüsse zur Aussendung eines Abfragesignals zu einem Transponder und zum Empfangen eines Transponder-Antwortsignals als Antwort darauf aufweist;
Anbringen eines Transponders an einem Medienelement zur Verwendung in dem Digitalmedien-System, wobei der Transponder ein Transponder-Antwortsignal aussendet,das Zeiger und Entschlüsselungsalgorithmen umfaßt;
Empfangen eines Transponder-Antwortsignals und Bereitstellen der Zeiger für Verschlüsselungsalgorithmen an irgendeiner vorbestimmten Adresse für das Mediensystem;
Lesen der Verschlüsselungsalgorithmen an der vorbestimmten Adresse oder irgendeiner vorbestimmten Stelle und Bereitstellung derselben für einen Prozessor;
Konfigurieren des Prozessors entsprechend den Entschlüsselungsalgorithmen zur Verarbeitung des digitalen Medieninhaltstroms, der ausgehend von dem Medienelement erzeugt wird, oder Bereitstellen von Informationen beim Zugriff zum Konfigurieren der E/A-Anschlüsse;
Bereitstellen von Anweisungen an den Prozessor bezüglich der Art und Weise, in welcher dieser sich selbst konfiguriert.

6. Verfahren nach Anspruch 5, ferner umfassend: Programmieren der vorbestimmten Adresse im Transponder-Speicher auf Herstellungsebene.

7. Verfahren nach Anspruch 5, ferner umfassend: Programmieren der vorbestimmten Adresse in dem Transponder auf Kundenebene.

8. Verfahren nach einem der Ansprüche 5 bis 7, ferner umfassend: Verschlüsseln der vorbestimmten Adresse mit dem Transponder.

9. Verfahren zur Gewährleistung, daß nur durch Urheberrecht geschütztes Material in einem Digitalmedien-Sytem verwendbar ist, folgende Schritte umfassend:
Integrieren einer Funkfrequenz-Abfrageeinrichtung mit einem Medienabspielgerät zum Aussenden eines Abfragesignals zu einem Transponder und zum Empfangen eines Transponder-Antwortsignals darauf ansprechend sowie zum Auslesen eines Datenworts auf einem Medienelement;
Anbringen eines Transponders an einem vorbestimmten Medienelement, wobei der Transponder ansprechend auf das Abfragesignal an die Abfrageeinrichtung ein Transponder-Antwortsignal aussendet, das ein Codewort und eine vorbestimmte Adresse enthält, die dem vorbestimmten Medienelement zugeordnet ist;
Empfangen eines Transponder-Antwortsignals und Bereitstellen der vorbestimmten Adresse für das Medienabspielgerät;
Auslesen des Datenwortes an der vorbestimmten Adresse;
Vergleichen des Datenwortes mit dem Codewort und Autorisieren des Abspielens oder der Verwendung des Medienelements bei Übereinstimmung zwischen Datenwort und Codewort.

10. Verfahren nach Anspruch 9, femer die Programmierung des Codewortes und der vorbestimmten Adresse in dem Speicher des Transponders auf Herstellungsebene umfassend.

11. Verfahren nach Anspruch 9, ferner das Programmieren des Codewortes und der vorbestimmten Adresse im Speicher des Transponders auf Kundenebene umfassend.

12. Verfahren nach einem der Ansprüche 9 bis 11, ferner die Durchführung einer Verschlüsselung wenigstens des Codewortes oder der vorbestimmten Adresse mittels des Transponders umfassend.

13. Verfahren nach einem der Ansprüche 9 bis 12, ferner die Durchführung des Vergleichsschrittes innerhalb derselben integrierten Schaltung umfassend.

14. Verfahren nach einem der Ansprüche 9 bis 13, ferner die Durchführung des Vergleichsschrittes unter Verwendung einer Nachschlagetabelle umfassend.

15. Verfahren nach einem der Ansprüche 9 bis 14, ferner die Durchführung des Vergleichsschrittes mittels eines Algorithmus umfassend.

## Revendications

1. Procédé pour garantir que seul le matériel sous copyright est utilisable dans un système de média numérique, comprenant les étapes de :
- intégration d'un interrogateur radiofréquence avec un diffuseur de médias ayant des ports d'entrée, sortie pour transmettre un signal d'interrogation à un transpondeur et pour recevoir en réponse un signal de réponse de transpondeur ;
- association d'un transpondeur à un élément de média pour l'utilisation dans le système de média numérique, dans lequel ledit transpondeur transmet un signal de réponse de transpondeur comprenant des algorithmes de décryptage ;
- réception d'un signal de réponse de transpondeur et fourniture desdits algorithmes de décryptage à un processeur ;
- configuration dudit processeur selon lesdits algorithmes de décryptage pour traiter le flux de contenu de média numérique engendré par ledit élément de média.

2. Procédé selon la revendication 1, dans lequel ladite étape de configuration comprend :
le téléchargement desdits algorithmes de décryptage dans une mémoire non volatile dans laquelle la sortie de la ROM flash est l'entrée dudit processeur.

3. Procédé selon la revendication 2, dans lequel ladite étape de téléchargement comprend le téléchargement desdits algorithmes de décryptages dans une ROM flash.

4. Procédé selon la revendication 1, dans lequel ladite étape de configuration comprend :
la fourniture d'information pour la configuration des ports d'entrée, sortie.

5. Procédé pour garantir que seul le matériel sous copyright est utilisable dans un système de média numérique, comprenant les étapes de :
- intégration d'un interrogateur radiofréquence avec un diffuseur de médias ayant des ports d'entrée, sortie pour transmettre un signal d'interrogation à un transpondeur et pour recevoir en réponse un signal de réponse de transpondeur ;
- association d'un transpondeur à un élément de média pour l'utilisation dans le système de média numérique, dans lequel ledit transpondeur transmet un signal de réponse de transpondeur comprenant des pointeurs pour des algorithmes de décryptage.
- réception d'un signal de réponse de transpondeur et fourniture desdits pointeurs pour les algorithmes de chiffrement à quelque adresse prédéterminée audit système de média.
- lecture desdits algorithmes de chiffrement à ladite adresse prédéterminée ou à quelque lieu prédéterminé et fourniture de ceux-ci à un processeur ;
- configuration dudit processeur selon lesdits algorithmes de décryptage pour traiter le flux de contenu de média numiérique engendré par ledit élément de média ou fournir une information sur l'accès à la configuration des ports entrée, sortie ;
- fourniture des instructions au processeur sur comment se configurer lui-même.

6. Procédé selon la revendication 5 comprenant en outre ; la programmation de ladite adresse prédéterminée dans la mémoire du transpondeur au niveau de la fabrication.

7. Procédé selon la revendication 5 comprenant en outre la programmation de ladite adresse prédéterminée dans le transpondeur au niveau du client.

8. Procédé selon l'une quelconque des revendications 5 à 7 comprenant en outre le chiffrement de ladite adresse prédéterminée dans le transpondeur.

9. Procédé pour garantir que seul le matériel sous copyright est utilisable dans un système de médias numérique, comprenant les étapes de :
- intégration d'un interrogateur radiofréquence avec un diffuseur de médias pour transmettre un signal d'interrogation à un transpondeur et pour recevoir en réponse un signal de réponse de transpondeur et pour lire un mot de donnée sur un élément de média ;
- association d'un transpondeur à un élément de média prédéterminé dans lequel ledit transpondeur transmet un signal de réponse de transpondeur comprenant un mot de code et une adresse prédéterminée associée avec ledit élément de média prédéterminé audit interrogateur en réponse audit signal d'interrogation.
- réception d'un signal de réponse de transpondeur et fourniture de ladite adresse prédéterminée audit diffuseur de média ;
- lecture dudit mot de donnée à ladite adresse prédéterminée ;
- comparaison dudit mot de donnée et dudit mot de code et autorisation de la diffusion ou de l'utilisation dudit élément média à la correspondance dudit mot de donnée et dudit mot de code.

10. Procédé selon la revendication 9, comprenant en outre la programmation dudit mot de code et de ladite adresse prédéterminée dans une mémoire de transpondeur au niveau de la fabrication.

11. Procédé selon la revendication 9, comprenant en outre la programmation dudit mot de code et de ladite adresse prédéterminée dans une mémoire de transpondeur au niveau du client.

12. Procédé selon l'une quelconque des revendications 9 à 11, comprenant en outre l'exécution d'un chiffrement de au moins un desdits mots de code et de ladite adresse prédéterminée dans le transpondeur.

13. Procédé selon l'une quelconque des revendications 9 à 12, comprenant en outre l'exécution de ladite étape de comparaison à l'intérieur du même circuit intégré.

14. Procédé selon l'une quelconque des revendications 9 à 13, comprenant en outre l'exécution de ladite étape de comparaison utilisant une table de correspondance.

15. Procédé selon l'une quelconque des revendications 9 à 14, comprenant en outre l'exécution de ladite étape de comparaison avec un algorithme.
